# EUROPEAN PATENT APPLICATION

(11) **EP 1 834 676 A1**
(43) Date of publication of application: **19.09.2007**
(21) Application number: 05783527.4
(22) Date of filing: 16.09.2005
(51) Int. Cl.: A63F 9/00

(54) **GAME MACHINE**

(30) Priority: 16.09.2004 JP 2004270506
(71) Applicant: Konami Digital Entertainment Co., Ltd., Tokyo 106-6114 (JP)
(72) Inventor: OMOTO, Toru, Minato-ku Tokyo 107-8324 (JP); OKUAKI, Masato, Minato-ku Tokyo 107-8324 (JP); NAKAMOTO, Hiroto, Minato-ku Tokyo 107-8324 (JP)
(74) Representative: Haley, Stephen
(86) International application number: PCT/JP2005/017155
(87) International publication number: WO 2006/030899

(57) **Abstract**

A play field includes a token table adapted to mount a plurality of tokens on an upper face thereof, and a groove adapted to receive a token fallen from the token table. A moving table is moving along the upper face of the token table in such a direction that the tokens on the token tables are pushed toward the groove. A token supplier is operable to supply a token to a player in a case where a token pushed by the moving table is fallen from the token table to the groove. A first game executer is operable to execute a first game with one of a plurality of first operation modes. A second game executer is operable to execute a second game with one of a plurality of second operation modes. An operation mode switcher is operable to switch the one of the first operation modes to another one and to switch the one of the second operation modes to another one, when a prescribed mode switching requirement is satisfied.

## Description

The invention relates to a game machine which can execute two games different from each other.

In Japanese Patent No. 3542119, a pusher game machine has been disclosed which includes a plurality of lottery mechanisms. In this pusher game machine, when a fed token passes through a token passing port of a token checker, a lottery program is executed so that a computer lottery game (a first game) using a winning probability table (winning probability data) is executed. Further, when a ball bonus combination is hit in the lottery game, a ball is supplied onto the tokens on a token table. When the ball falls down to a token-falling groove from the token table, the ball is conveyed into a ball lottery device. In the ball lottery device, a physical lottery game (a second game) is performed, in which it is judged whether the conveyed ball enters a prescribed winning port or not. When winning is determined in the physical lottery game, an additional high-dividend lottery is performed depending on the winning combination, or a prescribed number of tokens are paid out.

However, the connection between the computer lottery game and the physical lottery game is where a ball to be supplied when a ball bonus combination is hit in the computer lottery game is conveyed to the ball lottery device so as to be used in the physical lottery game. That is, the connection between those lottery games is where the lottery result of the computer lottery game is just a start-condition of the physical lottery game, which means the connection therebetween is weak. Therefore, there are difficulties in providing an excellent game property.

Further, another conventional pusher game machine is known, in which two different games are executed without being limited to the above-described lottery game, In such a conventional pusher game machine, however, the connection between the games is also weak. For example, in a pusher game disclosed in Japanese Patent No. 3542119, a game of passing a fed token through a token passing port of a token checker and a game of dropping tokens on a token table into a token-falling groove are executed. However, the connection between the games is where, in order to pass a token through the token passing port in the former game, the token needs to be dropped from the end of the token table into the token-falling groove. Therefore, even in the conventional pusher game machine which executes two different games, the connection between the games is where the game result of one game is just a start-condition of the other game, which means the connection therebetween is weak. Therefore, there are also difficulties in providing an excellent game property.

It is therefore an object of the invention to provide a game machine in which the connection between two different games, such as a computer lottery game and a physical lottery game, is strong, thereby providing a excellent game property.

In order to achieve the above object, according to the invention, there is provided a game machine,
a play field, including a token table adapted to mount a plurality of tokens on an upper face thereof, and a groove adapted to receive a token fallen from the token table;
a moving table, moving along the upper face of the token table in such a direction that the tokens on the token tables are pushed toward the groove;
a token supplier, operable to supply a token to a player in a case where a token pushed by the moving table is fallen from the token table to the groove;
a first game executer, operable to execute a first game with one of a plurality of first operation modes;
a second game executer, operable to execute a second game with one of a plurality of second operation modes; and
an operation mode switcher, operable to switch the one of the first operation modes to another one and to switch the one of the second operation modes to another one, when a prescribed mode switching requirement is satisfied.

With this configuration, when the prescribed mode switching requirement is satisfied, not only the operation mode of the first game executer is switched but also the operation mode of the second game executer is switched. When the operation modes of the respective game executer are switched, the operation and proceeding flows of the respective games are changed. Thus, according to this game machine, both proceeding flows of the first and second games are changed when the prescribed mode switching requirement is satisfied. Accordingly, the connection between the different two games (the first and second games) becomes strong in comparison with the conventional pusher game machine.

The mode switching requirement may be satisfied when a prescribed result is attained in the first game.

In this case, since the proceeding flow of the second game is changed in accordance with the result of the first game, the connection between the different two games (the first and second games) becomes strong in comparison with the conventional pusher game machine.

Each of the first operation modes may be associated with one of a plurality of winning probability data items. The first game executer may be operable to execute a computer program with one of the first operation modes which is associated with a selected one of the winning probability data items, thereby executing a first lottery game for determining whether a winning is hit. The operation made switcher may be operable to effect, when one of a plurality of mode switching requirements each of which is associated with one of the winning probability data items is satisfied, one of the first operation modes corresponding to the one of the winning probability data items.

In this case, when one of the mode switching requirements is satisfied, not only the winning probability data item used in the first lottery game (a so-called computer lottery game) is changed but also the proceeding flow of the second game can be changed.

The second game executer may be operable to execute a second lottery game with one of the second operation modes having winning probabilities which are different from one another. The operation mode switcher may be operable to effect one of the second operation modes having a higher winning probability when the selected one of the winning probability data items has a higher winning probability.

In this case, the winning probability of the second lottery game becomes higher when the winning probability of the first lottery game becomes higher. Thus, the player's expectation for the satisfaction of the mode switching requirement associated with the higher winning probability can be raised in comparison with the case where the winning probability of the first lottery game is merely increased.

The second game executer may comprise a supplier operable to supply a lottery moving body, and a winning port forming member forming at least one winning port which is adapted to receive the lottery moving body. The second game executer may be operable to execute the second lottery game for determining whether a winning is hit in accordance with whether the lottery moving body is received by the winning port.

In the above-described computer lottery game, since the winning or not is determined by the execution of the computer program, it is advantageous that a large-size equipment is not required but it is difficult to obtain player's assurance that the winning probability is changed, On the other hand, in the so-called physical lottery game, it is easy to obtain such player's assurance although a large-size equipment is required.

As the second lottery game in which the winning probability is changed when the prescribed mode switching requirement is satisfied, it is adopted a physical lottery game in which whether a winning is hit is determined in accordance with whether the lottery moving body supplied from the supplier is received by a prescribed, winning port. Accordingly, it is easier to obtain player's assurance that the winning probability of the second lottery game is changed, in comparison with the case where a computer lottery game is adopted.

The second game executer may comprise a winning port changer operable to change a number or a size of the winning port. The operation mode switcher may be operable to switch the second operation modes by causing the winning port changer to change the number or the size of the winning port.

The supper may be operable to supply the lottery moving body into the play field in accordance with a result of the first game.

In this case, it is possible to add relevancy between the first game and the second lottery game that the result of the first game is one of the start requirements of the second lottery game.

The game machine may further comprise a detector, operable to detect a token fallen from the token table to the groove. The first game executer may be operable to start the first game when the detector detects the token.

According to the invention, there is also provided a game machine, comprising:
a first game executer, operable to execute a computer program with one of first operation modes which is associated with a selected one of winning probability data items which are respectively associated with different winning probabilities, thereby executing a first lottery game for determining whether a winning is hit;
a second game executer, operable to move a lottery moving body with one of second operation modes which are respectively associated with different winning probabilities, thereby executing a second lottery game for determining whether a winning is hit in accordance with whether the lottery moving body satisfies a prescribed winning requirement; and
an operation mode switcher operable to switch the one of the first operation modes to another one and to switch the one of the second operation modes to another one, when a prescribed mode switching requirement is satisfied.

With this configuration, when the prescribed mode switching requirement is satisfied, the winning probability of the first lottery game which is a so-called computer lottery game is changed, the winning probability of the second lottery game which is a so-called physical lottery game is also changed. Accordingly, the connection between the computer lottery game and the physical lottery game becomes strong in comparison with the conventional game machine.

The second game may comprise a supplier operable to supply a lottery moving body, and a winning port forming member forming at least one winning port which is adapted to receive the lottery moving body. The second game executor may be operable to execute the second lottery game for determining whether a winning is hit in accordance with whether the lottery moving body is received by the winning port.

The second game executer may comprise a winning port changer operable to change a number or a size of the winning port. The operation mode switcher may be operable to switch the second operation modes by causing the winning port changer to change the number or the size of the winning port.

The winning port forming member may form at least one non-winning port adapted to receive the lottery moving body. The second game executer may comprise a winning port changer operable to change a number or a size of the non-winning port. The operation mode switcher may be operable to switch the second operation modes by causing the winning port changer to change the number or the size of the non-winning port.

The second game executer may comprise a supplier operable to supply a lottery moving body. The second game executer may be operable to accumulate a point when the lottery moving body satisfies a prescribed point accumulating requirement, thereby executing a second lottery game for determining whether a winning is hit in accordance with whether the accumulated point reaches a prescribed value. Points to be accumulated when the point accumulating requirement is satisfied are different in the respective second operation modes.

In the Drawings;
Fig. 1 is a flow chart showing an entire game flow of a pusher game machine according to a first embodiment of the invention.
Fig. 2 is a perspective view of an exterior appearance of the pusher game machine.
Fig. 3 is a perspective view of a station in the pusher game machine.
Fig. 4 is a block diagram showing a main part of a control mechanism in the pusher game machine.
Fig. 5 is a perspective view of a central lottery device in the pusher game machine, showing a state that a fantastic chance is executed.
Fig. 6 is a perspective view of the central lottery device, showing a state that a jackpot chance is executed.
Fig. 7 is a plan view of a central lottery device in a pusher game machine according to a second embodiment of the invention.

Embodiments of the invention will be described below in detail with reference to the accompanying drawings.

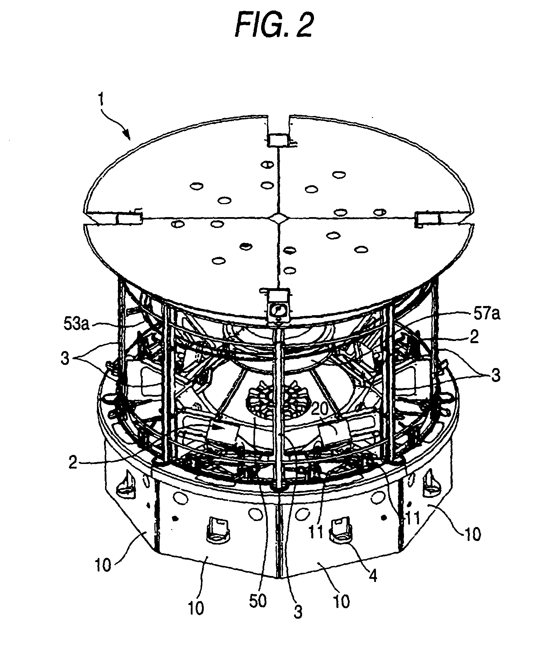

Fig. 2 illustrates a pusher game machine 1 according to a first embodiment of the invention. The pusher game machine 1 has eight separate play fields 2. In each of the play fields 2, two players can play games. That is, up to 16 players can play games at the same time. Further, a play space in which players enjoy games is partitioned by posts 3 provided in the respective play fields 2. Between the posts 3, each of the play field is covered by transparent glass. Accordingly, players cannot directly touch mechanisms inside the play field 2. Further, in each of the play fields 2, a pusher game is performed by a station 10 serving as a game machine which independently performs the pusher game.

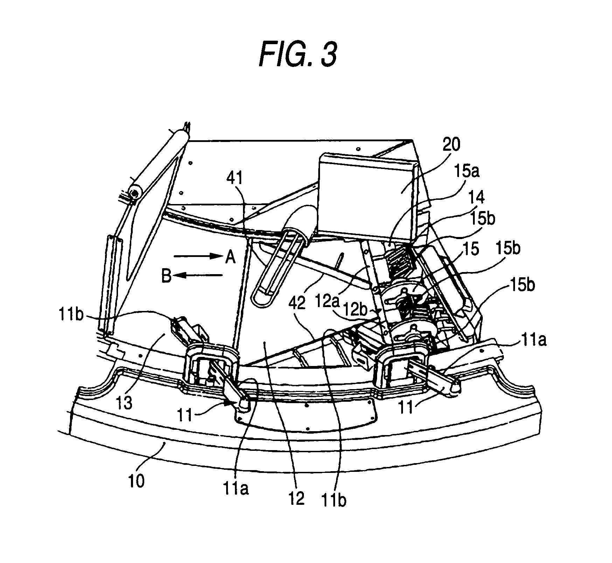

As shown in Fig. 3, the station 10 has two token feeders 11 for feeding a token into the play field 2. Each of the token feeder 11 has a token feeding port 11 a serving as a token receiver which is exposed outside the pusher game machine 1. When the token feeding port 11a receives a token from a player, the token is fed into the play field 2 from a front end portion 11 b positioned inside the play field 2 through a token passage formed inside the token feeder 11, The token passage has a fed-token number sensor (not shown) provided to detect the passing of token. When detecting a token, the fed-token number sensor outputs a detection signal to a main controller to be described below. Further, the token feeder 11 is mounted to turn with respect to a main body of the pusher game machine 1 such that a player can arbitrarily select a token feeding direction. Accordingly, a player can direct the front end portion 11b of the token feeder 11 toward the left or right side in a prescribed range,

Inside the play field 2 into which a token is fed by the token feeder 11, there are provided a fixed token table 12 and a pusher table 13 which reciprocates in directions indicated by arrows A and B of Fig. 3. The token table 12 mounts a plurality of tokens on the upper face thereof. When the tokens on the token table 12 fall down to a token-falling groove 14 formed in the right side of the token table 12 (in Fig. 3), the tokens are supplied from a tray 4 (refer to Fig. 2) provided on the outer face of the main body of the pusher game machine 1. In this way, a player can acquire tokens. Further, in the right-side end portion of the token table 12 (hereinafter, referred to as the open end portion) in Fig. 3, there is provided a stopper 12a which prevents tokens stacked on the token table 12 from easily failing down to the token-falling groove 14.

The pusher table 13 is reciprocated along the upper face of the token table 12 at a prescribed stoke in the directions indicated by the arrows A and B of Fig. 3 by a driving mechanism (not shown). While reciprocating along the upper face of the token table 12, the pusher table 13 pushes out tokens mounted on the upper face of the token table 12 toward the open end portion. Further, tokens are also mounted on the upper face of the pusher table 13. When the tokens on the pusher table 13 fall down from the right side in Fig. 2, the tokens are mounted on the token table 12. If the tokens fall down from the upper face of the pusher table 13 when the pusher table 13 is not located in the rightmost position, the pusher table 13 pushes the tokens into the upper face of the token table 12 on which the plurality of tokens are stacked. As such, when the tokens are pushed, pressing force toward the open end portion acts on some of the tokens. That is, the pressing force is applied to the tokens which are held by the stopper 12a at the open end portion such that the tokens fall down to the token-falling groove 14.

Inside the token-falling groove 14, a rotary conveying mechanism 15 is provided. The rotary conveying mechanism 15 includes a rotary shaft 15a parallel to the open end portion of the token table 12, three rotary wings 15b fixed to the rotary shaft, and a driving mechanism (not shown) for rotating the rotary shaft 15a. Each of the rotary wings 15b is composed of a plurality of wings. As the rotary shaft 15a is rotated by a driving force from the driving mechanism, the rotary wings 15b are always rotated around the rotary shaft at constant speed. The tokens which have fallen down to the token-falling groove 14 from the open end portion of the token table 12 are received on the wings of the rotary wing 15b and are then conveyed toward the right side in Fig. 3 by the rotation of the rotary wing 15b. After that, the tokens drop from the wings so as to fall down into the token-falling groove 14. Under the place where tokens conveyed by the respective rotary wings 15b drop, there is a token sensor (hereinafter, referred to as a start checker). The start checker is composed of a photo-interrupter, for example. When a token passes through an optical path thereof, the start checker outputs a token detection signal. The detection signal is sent to the main controller to be described below.

All the tokens which have fallen down from the open end portion of the token table 12 to the token-falling groove 14 are finally moved to a token hopper serving as a token supplier (not shown) provided on the bottom portion of the token-falling groove 14. Then, the tokens are ejected into the tray 4 shown in Fig. 2 by the token hopper. In a token ejecting path between the token hopper and the tray 4, there is provided a payout token number sensor (not shown) which detects the passing of token. When detecting a token, the payout token number sensor outputs a detection signal to the main controller to be described below.

Inside the play field 2, a liquid crystal display 20 is provided. On the liquid crystal screen of the liquid crystal display 20, three reel images are displayed. The display control of the liquid crystal display 20 in each of the stations 10 is collectively performed by the main controller through a display controller to be described below.

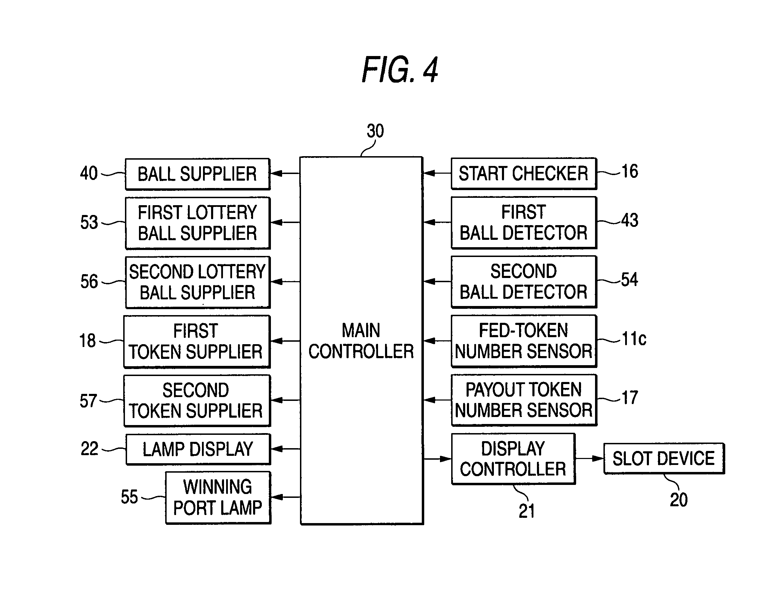

Fig. 4 is a control block diagram illustrating essential sections of a control mechanism which controls the entire pusher game machine 1. In Fig. 4, sections provided in each of the stations 10 are shown as only one section, and the other sections are omitted,

The pusher game machine 1 is collectively controlled by the main controller 30. The main controller 30 is composed of a CPU, a RAM, a ROM and the like. The main controller 30 executes various computer programs stored in the ROM so as to perform a variety of control processing tasks. The main controller 30 receives detection signals which are outputted from the start checker 16, first and second ball sensors 43 and 54 to be described below, the fed-token number sensor 11c, and the payout token number sensor 17, respectively. Moreover, although only one second ball sensor 54 is shown in Fig. 4, tens of the second ball sensors 54 actually exist as will be described below. Further, the respective second ball sensors 54 are connected to the main controller 30. Further, the main controller 30 controls the display contents of the liquid crystal display 20 through the display controller 21. Furthermore, the main controller 30 controls a ball supplier 40, a first lottery ball supplier 53 for fantastic chance, a second lottery ball supplier 56 for jackpot chance, a first token supplier 18 provided in each of the stations, a second token supplier 57 which is commonly used by the respective stations, and a lamp display 22. The ball supplier 40, the first lottery ball supplier 53 for fantastic chance, and the second lottery ball supplier 56 for jackpot chance will be described below.

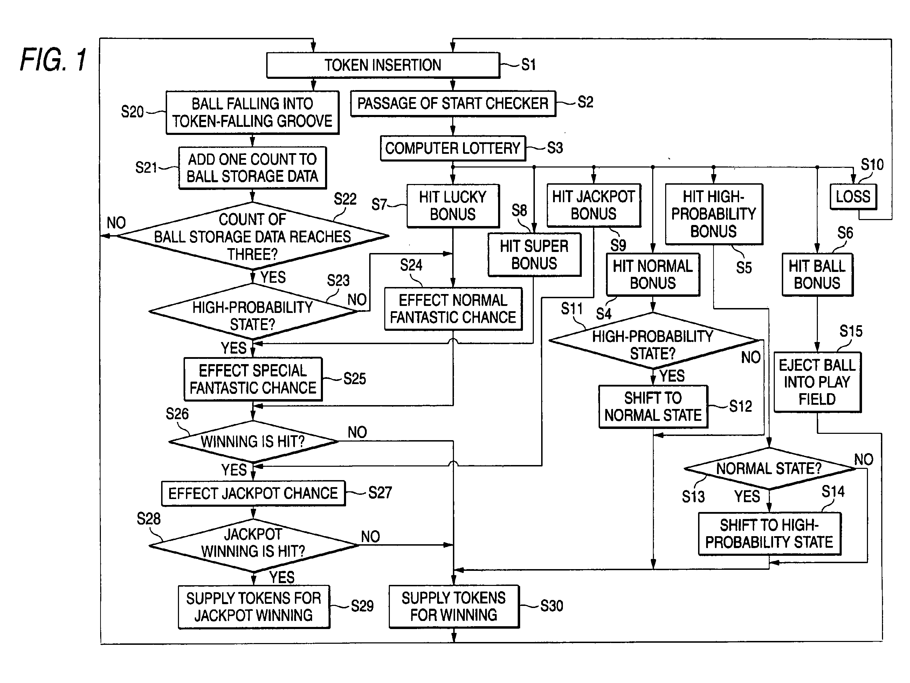

Fig. 1 shows a flow of the entire game of the pusher game machine 1. When a token is fed into the token feeder 11 by a player (S1), the fed-token number sensor 11c outputs a detection signal to the main controller 30. The main controller 30 receiving the detection signal adds one to token IN data within the RAM and counts a jackpot storage number data indicating the number of tokens to be paid out when a jackpot (hereinafter, referred to as JP) to be described below is hit. The initial value of the JP storage number data is 500 in this embodiment, but can be arbitrarily changed. The count value of the JP storage number data with respect to one detection signal can be arbitrarily set. In this embodiment, the count value is set to 0.03. Therefore, when one token is fed by a player, a value of 0.03 is added to the JP storage number data. The count value of the JP storage number data is displayed on an indicator provided in the central upper portion of the pusher game machine 1 by the main controller 30.

When the start checker 16 detects that the token falls down to the token-falling groove 14 (S2), the detection signal from the start checker 16 is outputted to the main controller 30. The main controller 30 receiving the detection signal executes a first lottery program stored in the ROM so as to carry out a computer lottery game (a first game) (S3). The main controller 30 executing the first lottery program generates a random number for lottery and determines a winning combination based on the generated random number for lottery by As shown in a winning probability table (winning probability data) showing a corresponding relationship between a plurality of combinations and random numbers (S4 to S9). In the computer lottery game, a loss combination can be determined without a winning combination being determined (S10).

In this embodiment, a normal winning probability table and a winning probability table for varying probability are stored in the ROM. The main controller 30 reads any one of the tables from the ROM and then executes the computer lottery game by using the read table. These winning probability tables are used for determining winning probabilities different from each other. The winning probability table for varying probability corresponds to a higher winning probability that the normal winning probability table. Specifically, in the winning probability table for varying probability, some of random numbers corresponding to a loss combination in the normal winning probability table correspond to at least one of the plurality of winning combinations. That is, in the winning probability table for varying probability, the number of random numbers corresponding to a loss combination is smaller than in the normal winning probability table, and a probability where a loss combination is determined is reduced. In the winning probability table for varying probability according to this embodiment, the number of random numbers corresponding to all the winning combinations is larger than in the normal winning probability table.

Hereinafter, a state where the computer lottery game is performed by using the normal winning probability table is referred to as a normal state, and a state where the computer lottery game is performed by using the winning probability table for varying probability is referred to as a high-probability state.

Based on the lottery result of the computer lottery game, the main controller 30 outputs an image display instruction to the display controller 21. The display controller 21 receiving the image display instruction displays an image, in which three reels rotate, on the liquid crystal screen of the liquid crystal display 20. Finally, a still image of three reels is displayed. At this time, when a winning combination is determined by the main controller 30, a combination of symbols related to the winning combination is finally displayed on the basis of the image display instruction. Further, when a loss combination is determined by the main controller 30, a combination of proper symbols which does not correspond to a winning combination is finally displayed on the basis of the image display instruction. Accordingly, when a player sees the screen of the liquid crystal display 20, the lottery result of the computer lottery game can be informed. When a winning combination is determined by the execution of the first lottery program, the main controller 30 performs a processing task for imparting the benefit of the winning combination to the player.

Table 1 comparatively shows combinations used in this embodiment and benefits of the respective combinations. When any one of normal bonuses according to the appeared same symbols of even numbers ("2", "4", "6", and "8") is hit (S4), first, the main controller 30 judges whether a current state is the high-probability state or not (S11). When it is determined that the current state is the high-probability state, the main controller 30 terminates the high-probability state so as to change into the normal state (S12). Specifically, the main controller 30 reads the normal winning probability table from the ROM and then executes the rest of the computer lottery game by using the normal winning probability table. In this case, a winning probability increasing condition as a mode switching condition is where a normal bonus is hit in the high-probability state.

**Table 1**

| combination | appeared same symbols | benefit |
|---|---|---|
| normal bonus | even number | supplying token |
| high-probability bonus | odd number (excluding 7) | supplying token and increasing probability |
| ball bonus | one ball symbol | supplying one ball to play field |
| lucky bonus | lucky symbol | transferring to normal fantastic chance |
| super bonus | supper symbol | transferring to special fantastic chance |
| jackpot bonus | 7 | transferring to jackpot chance |

Further, when any one of normal bonuses is hit as described above, the main controller 30 controls the display controller 21 so as to display the appeared same symbols of the even number on the screen of the liquid crystal display 20 as a still image. Then, the main controller 30 outputs a token supply instruction to a first token supplier 18. The first token supplier 18 includes a token hopper which is installed inside the pusher game machine 1 so as to store a plurality of tokens, a token supplying section which supplies the tokens stored in the token hopper, and a token passage which guides the tokens supplied from the token supplying section into the play field 2. The first token supplier 18 receiving the token supply instruction controls the token supplying section so as to supply tokens as many as the number of tokens according to the token supply instruction. The tokens supplied by the token supplying section fall down to the upper face of the pusher table 13 through the token passage and are then supplied into the play field 2 (S30).

When any one of high-probability bonuses related to the appeared same symbols of odd numbers ("1", "3", "5", and "9") excluding "7" is hit (S5), the main controller 30 judges whether a current state is the normal state or not (S13). When it is judged that the current state is the normal state, the main controller 30 terminates the normal state and changes the state into the high-probability state (S14). Specifically, the main controller 30 reads the winning probability table for varying probability from the ROM and then executes the rest of the computer lottery game by using the winning probability table for varying probability. In this case, a winning probability increasing condition as a mode switching condition is where a high-probability bonus is hit in the normal state.

When any one of the high-probability bonuses is hit as described above, the main controller 30 controls the display controller 21 so as to display the appeared same symbols of the odd number on the screen of the liquid crystal display 20 as a still image. Then, the main controller 30 outputs a token supply instruction to the first token supplier 18. Accordingly, tokens as many as the number of tokens according to the token supply instruction are supplied into the target play field 2, similar to the case of the normal bonus.

In this embodiment, the tokens to be supplied by the first token supplier 18 and the second token supplier 57 to be described below are not directly paid out to a player, but are supplied into the play field 2. Accordingly, a player has to drop the tokens from the token table 12 to the token-falling groove 14 to acquire the tokens. Typically, when tokens are supplied into the target play field 2, the pusher table 13 pushes the tokens, and the tokens on the token table 12 are pushed out toward the open end portion so as to fall down to the token-falling groove 14. Then, a player acquires the tokens.

Further, when any one of ball bonuses is hit (S6), the main controller 30 outputs a ball supply instruction to the ball supplier 40. The ball supplier 40 includes a ball storing section (not shown) disposed inside the pusher game machine 1, a ball supply controller (not shown), a ball ejector 41 (shown in Fig. 3) which ejects balls inside the play field, and a ball conveyer which conveys balls from the ball storing section to the ball ejector 41 under the control of the ball supply controller. When the ball supply instruction from the main controller 30 is received by the ball supply controller of the ball supplier 40, the ball supply controller controls the ball conveyer so as to convey one ball from the ball storing section to the ball ejector 41. The ball conveyed to the ball ejector 41 rolls on a rail of the ball ejector 41 so as to be ejected onto the token table 12 inside the play field (S15).

The ball payout in such a manner is placed inside the play field in a state where the ball rides on the tokens stacked on the token table 12. Further, while the tokens are moved, the ball is moved toward the token-falling groove 14. As shown in Fig. 3, a notched portion 12b is formed in the central portion of the stopper 12a provided in the token table 12 such that balls easily fall down. On the token table 12, two ball guides 42 are provided so as to gather only the balls on the token table 12 toward the center side. Accordingly, as the balls on the token table 12 travel toward the token-falling groove 14, the balls are gathered toward the center by the ball guide 42 and then easily fall down to the token-falling groove 14 through the notched portion 12b of the stopper 12a.

When the ball falls down to the token-falling groove 14, the ball rides on the wing of the rotating wing 15b of the rotary conveying mechanism 15 and is then conveyed toward the right side in Fig. 3 by the rotation of the rotary wing 15b. After that, the ball drops from the wing so as to fall down to the token-falling groove 14. Above the start checker 16 provided inside the token-falling groove 14, a sorter (not shown) is provided. The sorter is composed of rails in which clearance is formed, the clearance being narrower than the diameter of the ball and being wider than the diameter of the token. The token which has dropped from the wing of the rotary wing 15b passes through the start checker 16 via the space between the rails. Meanwhile, the ball which has dropped from the wing of the rotary wing 15b rides on the rail, but does not reach the start checker 16. Since the rail is inclined toward the ball storing section, the ball riding on the rail is conveyed to the ball storing section due to the inclination of the rail. In the middle of the rall, the first ball sensor 43 is provided. The first ball sensor 43 is composed of a photo-interrupter, for example. When a ball passes through an optical path of the first ball sensor 43, the first ball sensor 43 outputs a ball detection signal. The detection signal is sent to the main controller 30, as shown in Fig. 4.

As such, the ball falls down to the token-falling groove 14, and is detected by the first ball sensor 43 (S20). When the detection signal is received by the main controller 30, the main controller 30 adds one to ball-storage number data within the RAM (S21). Further, the main controller 30 controls the lamp display 22, which informs the count value of the ball-storage number data to a player, so as to turn on ball-storage lamps as many as the number corresponding to the count value. The lamp display 22 including three ball-storage lamps is provided inside the play field of each of the stations 10. After that, the main controller 30 judges whether the ball-storage number data reaches three or not (S22). When it is judged that the ball-storage number data reaches three, the main controller 30 executes a second lottery program which is stored in the ROM. Then, the main controller 30 controls a central lottery device 50, which will be described below, so as to carry out a fantastic chance as a second game (S24 and S25).

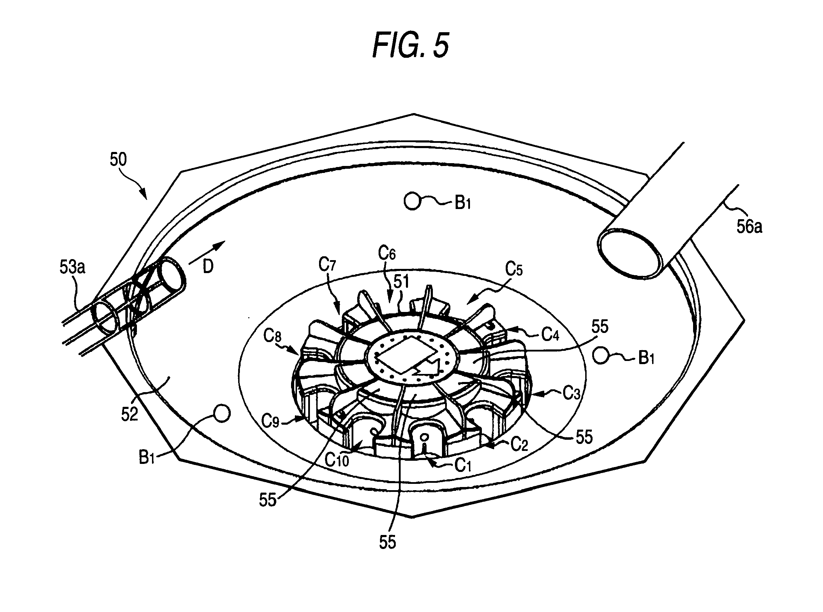

As shown in Fig. 5, the central lottery device 50 includes a winning port forming member 51, a lottery ball receiving table 52, and a first lottery ball supplier 53. The winning port forming member 51 forms a prescribed winning port which a lottery ball B₁ enters, the lottery ball B₁ being a spherical moving body for lottery. The first lottery ball supplier 53 serves as a supplier for supplying a lottery ball B₁ onto the lottery ball receiving table 52. The first lottery ball supplier 53 includes a lottery ball storing section (not shown), a ball supply controller (not shown), and a conveyance rail 53a (shown in Fig. 2) which conveys the lottery ball B₁ from the lottery ball storing section onto the lottery ball receiving table 52. When receiving a ball supply instruction from the main controller 30, the ball supply controller conveys the lottery ball B₁ within the lottery ball storing section to the upper portion of the conveyance rail 53a, Accordingly, the lottery ball B₁ is conveyed along the conveyance rail 53a due to the inclination of the conveyance rail 53a and is finally supplied onto the lottery ball receiving table 52 from a direction of an arrow D in Fig. 5.

As shown in Fig. 5, the lottery ball receiving table 52 is formed in a bowl shape and has the winning port forming member 51 provided in the central portion thereof. The disk-shaped winning port forming member 51 has tens ball receiving port C₁ to C₁₀ formed as circular members on the outer peripheral face at even intervals. The winning port forming member 51 is rotated about the central axis of the lottery ball receiving table 52 by a rotary driving mechanism (not shown). The lottery ball B₁ supplied from the conveyance rail 53a onto the lottery ball receiving table 52 moves around the winning port forming member 51, while rolling on the lottery ball receiving table 52. Then, due to the inclination of the lottery ball receiving table 52, the lottery ball B₁ finally enters one of the ball receiving ports C₁ to C₁₀ of the winning port forming member 51. The bottom faces of the ball receiving ports C₁ to C₁₀ are formed with openings. Therefore, the lottery ball B₁ entering the ball receiving port falls down from the opening of the ball receiving port and is then collected. Inside the respective ball receiving ports C₁ to C₁₀ or under the ball respective receiving ports C₁ to C₁₀, the second ball sensors 54 are provided. Each of the second ball sensors 54 is formed of a photo-interrupter, for example. When the lottery ball B₁ passes through an optical path of the second ball sensor 54, the second ball sensor 54 outputs a ball detection signal. The detection signal is sent to the main controller 30, as shown in Fig. 4, Through the ball detection signal, the main controller 30 can perceive whether or not a lottery ball enters or not, for each of the ball receiving ports C₁ to C₁₀.

As described above, when it is judged that the ball-storage number data reaches three, the main controller 30 controls the central lottery device 50 by executing the second lottery program and then executes the fantastic chance. Specifically, the main controller 30 allocates at least one of the ball receiving ports C₁ to C₁₀ as a winning port. That is, the main controller 30 can change the number of winning ports in the range of 1 to 10. Further, the main controller 30 outputs a ball supply instruction to the first lottery ball supplier 53, The first lottery ball supplier 53 receiving the ball supply instruction drives the ball supply controller so as to successively supply twelve lottery balls B₁ onto the lottery ball receiving table 52. Then, the fantastic chance is executed, where winning is determined by whether the lottery balls B₁ enters all the allocated winning ports or not.

In this embodiment, there are provided two types of fantastic chances, i.e., a normal fantastic chance and a special fantastic chance. That is, as the main controller 30 executes the second lottery game to control the central lottery device 50, the main controller 30 is operated at any one of a normal operation mode and a special operation mode. In the normal operation mode where the normal fantastic chance is executed, three ports among tens of the ball receiving ports C₁ to C₁₀ are allocated as winning ports. In the special operation mode where the special fantastic chance is executed, one port among tens of the ball receiving ports C₁ to C₁₀ is allocated as a winning port. Those fantastic chances are executed in the same manner, except that the number of allocated winning ports is different from each other. In this embodiment, as described above, if lottery balls B₁ do not enter all the allocated winning ports, the bonus cannot be hit. Therefore, the special fantastic chance is a lottery game of which the winning probability is higher than that of the normal fantastic chance. That is, the main controller 30 executing the second lottery program selects any one of two operation modes, of which the probabilities are different from each other, and then executes any one of the normal fantastic chance and the special fantastic chance.

As shown in Fig. 5, the winning port forming member 51 has ten winning port lamps 55 corresponding to the respective ball receiving ports C₁ to C₁₀. Lighting control of the respective winning port lamps 55 is performed by the main controller 30. After the winning port is allocated as described above, the main controller 30 turns on the winning port lamp 55 corresponding to the ball receiving port allocated as the winning port and turns off the remaining winning port lamps 55. Then, when the second ball sensor 54 detects that a lottery ball enters the ball receiving port corresponding to the winning port lamp 55 which is turned on, the main controller 30 turns off the winning port lamp 55.

Whether the main controller 30 operates at the normal operation mode or at the special operation mode is determined by the result of the computer lottery game. Specifically, when the high-probability bonus is hit in the previous computer lottery game such that the state changes into the high-probability state, and when the high-probability state is continuously maintained, the main controller 30 operates at the special operation mode. Meanwhile, when a current state is the normal state, the main controller 30 operates at the normal operation mode, That is, in this embodiment, the main controller 30 serving as an operation mode switcher operable to judge whether a current state is the high-probability mode or not (S23). When it is judged that the current state is not the high-probability state, the main controller 30 switches the operation mode to the normal operation mode where the normal fantastic chance is executed (S24). When it is judged that the current state is the high-probability state, the main controller 30 switches the operation mode to the special operation mode where the special fantastic chance is executed (S25).

In any one of the fantastic chances, the main controller 30 judges on the basis of the detection signal from the second ball sensor 54 whether the lottery balls B₁ enter all the winning ports or not, that is, whether the bonus is hit or not (S26). When it is judged that the lottery balls B₁ have not entered all the winning ports, the main controller 30 judges that the bonus is lost, and then terminates the fantastic chance. Meanwhile, when it is judged that the lottery balls B₁ enter all the winning ports, the main controller 30 judges that the bonus is hit, and then executes a third lottery program stored in the ROM so as to control the central lottery device 50. Then, the main controller 30 executes a jackpot chance to be described below (S27).

Although the lottery balls B₁ do not enter all the winning ports in the normal fantastic chance, the lottery balls B₁ can enter some of the winning ports. In this case, the main controller 30 outputs an instruction to payout tokens as many as the number of winning ports, which the lottery balls B₁ have entered, to the second token supplier 57. The token supplier 18 receiving the token supply instruction controls the token supplying section so as to payout tokens as many as the number of tokens according to the token supply instruction. The second token supplier 57 includes a token hopper which is installed in the inner and lower portion of the pusher game machine 1 so as to store a plurality of tokens; a token supplying section which puts out the tokens stored in the token hopper; a token conveyance rail which conveys tokens supplied from the token supplying section; and a token ejector 57a (shown in Fig. 2) which receives the tokens conveyed by the token conveyance rail and then ejects the tokens into the play field of the target station 10. The token ejector 57a is disposed above the lottery ball receiving table 52 of the central lottery device 50. The token conveyance rail is omitted in Fig. 2, but extends in a helical shape so as to surround the token ejector 57a. The token conveyed from the token hopper to the upper portion of the pusher game machine 1 by the token supplying section is finally conveyed to the central token ejector 57a through the token conveyance rail. Then, the token is ejected from the token ejector 57a to the play field of the station 10 which should payout tokens and then falls down to the upper face of the pusher table 13 so as to be supplied into the play field 2 (S30).

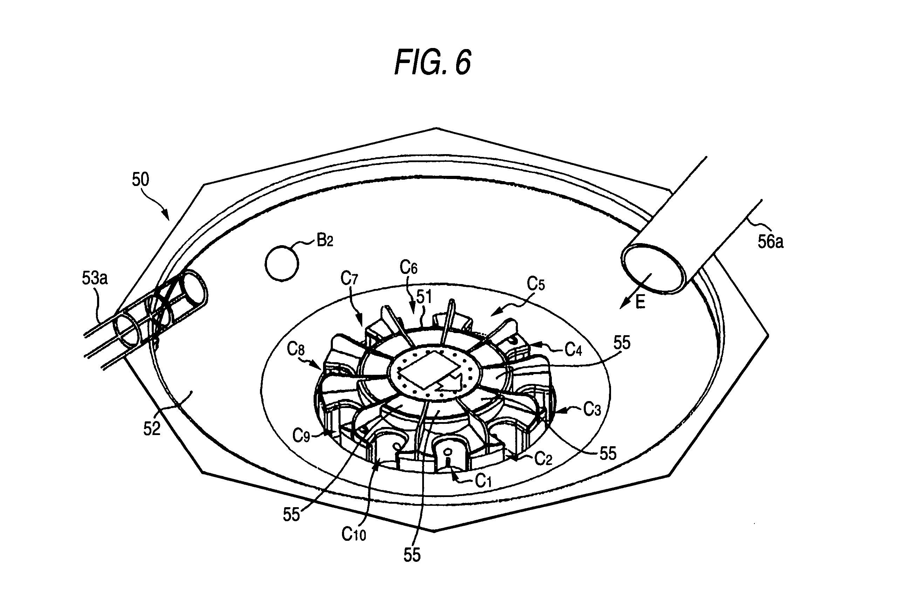

Although the central lottery device 50 is also used to perform the jackpot chance, a lottery ball B₂ is used as a lottery ball, as shown in Fig. 6. The lottery ball B₂ has a larger diameter than the lottery ball B₁ which is used the fantastic chance. Specifically, when the main controller 30 judges that the bonus is hit in the fantastic chance, the main controller 30 first allocates one of the ball receiving ports C₁ to C₁₀ as a winning port. Then, the main controller 30 outputs a ball supply instruction to the second lottery ball supplier 56, The second lottery ball supplier 56 includes a lottery ball storing section (not shown), a ball supply controller (not shown), and a conveyance passage 56a (shown in Fig. 2) which conveys a lottery ball B₂ from the lottery ball storing section onto the lottery ball receiving table 52.

In this embodiment, one of the posts 3 which partition the play fields 2 serves as the lottery ball storing section. Specifically, the lottery balls B₂ are stored inside the post 3, in a state where they are stacked in a line. Further, when the ball supply controller receives a ball supply instruction from the main controller 30, the ball supply controller newly feeds a lottery ball B₂ into the bottom of the lottery balls B₂ stacked inside the post 3. Then, the uppermost tottery ball B₂ among the stacked lottery balls B₂ is lifted to a lottery ball ejecting hole provided in the upper portion of the post 3 and then falls down from the lottery ball ejecting hole. The lottery ball B₂ which has fallen down is received in the conveyance passage 56a and is conveyed along the conveyance passage 56a due to the inclination of the conveyance passage 56a. Finally, the lottery ball B₂ is supplied onto the lottery ball receiving table 52 from a direction of an arrow E in Fig. 6.

In the jackpot chance, the main controller 30 allocates one of the ball receiving ports C₁ to C₁₀ as a winning port. Further, the main controller 30 turns on the winning port lamp 55 corresponding to the ball receiving port allocated as a winning port. Then, the main controller 30 outputs a ball supply instruction to the second lottery ball supplier 56. The second lottery ball supplier 56 receiving the instruction drives the ball supply controller so as to supply one lottery ball B₂ onto the lottery ball receiving table 52. Then, the main controller 30 determines whether the bonus is hit or not, depending on whether the lottery ball B₂ enters the allocated winning port. Specifically, based on the detection signal from the second ball sensor 54, the main controller 30 judges whether the lottery ball B₂ enters the winning port or not, that is, whether the bonus is hit or not (S28). When it is judged that the lottery ball B₂ has not entered the winning port, the main controller 30 judges that the bonus is lost. Further, the main controller 30 causes the second token supplier 57 to supply a prescribed number of tokens and then terminates the jackpot chance, Meanwhile, when it is judged that the lottery ball B₂ has entered the winning port, the main controller 30 judges that the bonus is hit, and reads the JP storage number data stored in the RAM. Then, the main controller 30 outputs an instruction to supply tokens as many as the number of tokens, which is indicated by the JP storage number data, to the second token supplier 57. Accordingly, a large number of tokens are supplied into the play field 2 of the station 10 (S29).

According to this embodiment, when it is judged as the result of the computer lottery game that the state is not the high-probability state but the normal state in S23, the main controller 30 operates at the normal operation mode and executes a normal fantastic chance of which the winning probability is low (S24). Meanwhile, when it is judged that the state is the high-probability state in S23, the main controller 30 operates at the special operation mode and executes a special fantastic chance of which the winning probability is high (S25). As such, according to the pusher game machine 1, the contents of the fantastic chance can be changed in accordance with the lottery result of the computer lottery game. Therefore, the connection between the fantastic chance and the computer lottery game to be performed in each of the stations 10 becomes strong, which makes it possible to provide an excellent game property.

In this embodiment, as a method for changing the winning probability of the fantastic chance which is a physical lottery game, it has been described that the number of ball receiving ports to be allocated as the winning ports among tens of the ball receiving ports is changed so as to change the number of winning ports. However, another method may be used. For example, a driving mechanism for changing the size (width) of the ball receiving port may be provided in the winning port forming member 51 such that the lottery moving body easily enters the ball receiving port allocated as a winning port or has difficulty in entering the ball receiving port. In this case, in order to increase a winning probability, the driving mechanism may be controlled so as to enlarge the size of the ball receiving port allocated as a winning port. Further, in order to reduce a winning probability, the driving mechanism may be controlled so as to reduce the size of the ball receiving port allocated as a winning port.

Moreover, a protrusion for changing a rolling direction of the lottery ball may be provided on the lottery ball receiving table 52. Then, the state of the protrusion is changed by a driving mechanism, or the inclination direction of the lottery ball receiving table 52 is changed by the driving mechanism, such that the lottery moving body easily enters the ball receiving port allocated as a winning port or has difficulty in entering the ball receiving port.

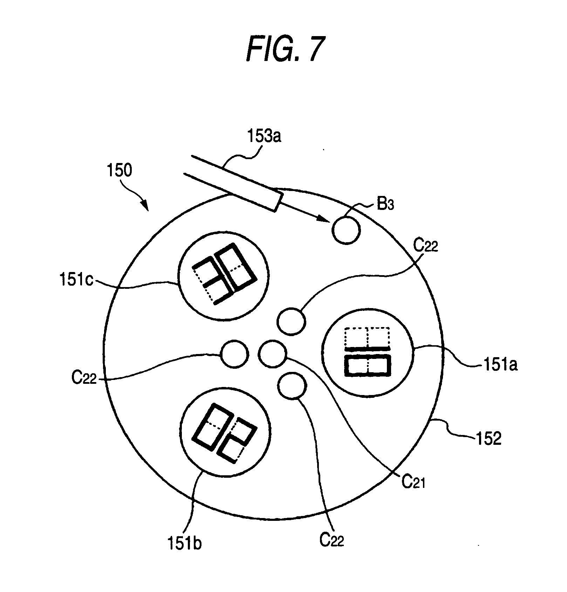

Next, a second embodiment of the invention will be described. In this embodiment, the fantastic chance is performed by using a central lottery device 150 (shown in Fig. 7) instead of the above-described central lottery device 50. The central lottery device 150 includes three thumper bumpers 151a, 151b, and 151c, a lottery ball receiving table 152 serving as a non-winning port forming member, and a lottery ball supplier (not shown) which supplies a lottery ball B₁ onto the lottery ball receiving table 152. The lottery ball supplier includes a lottery ball storing section (not shown), a ball supply controller (not shown), and a conveyance rail 153a (shown in Fig. 7) which conveys the lottery ball B₃ from the lottery ball storing section onto the lottery ball receiving table 152. When receiving a ball supply instruction from the main controller 30, the ball supply controller conveys a lottery ball B₃ within the lottery ball storing section to the upper portion of the conveyance rail 153a. Accordingly, the lottery ball B₃ is conveyed along the conveyance rail 153a due to the inclination of the conveyance rail 153a, Finally, the lottery ball B₃ is supplied onto the lottery ball receiving table 152 from a direction of an arrow in Fig. 7.

The lottery ball receiving table 152 is formed in a bowl shape, similar to the central lottery device 50. In the central portion thereof, one non-winning port C₂₁ and three non-winning ports C₂₂ are provided. When the lottery ball B₃ enters any one of the non-winning ports C₂₁ and C₂₂, the lottery ball B₃ falls down from the opening of the non-winning port C₂₁ or C₂₂ and is then collected. When the lottery ball B₃ is collected into any one of the non-winning ports C₂₁ and C₂₂, the lottery ball B₃ is detected by a ball sensor (not shown). The ball sensor is composed of, for example, a photo-interrupter, similar to the second ball sensor 54. The ball detection signal is sent to the main controller 30. Through the ball detection signal, the main controller 30 can perceive whether the lottery ball enters one of the non-winning ports C₂₁ and C₂₂ or not.

Three of the thumper bumpers 151a, 151 b, and 151 c are provided on the lottery ball receiving table 152 so as to surround the non-winning ports C₂₁ and C₂₂. The thumper bumpers 151 a, 151 b, and 151 c are the same as those to be used in a well-known pinball machine. When the lottery ball B₃ comes in contact with the thumper bumpers 151a, 151b, and 151c, the thumper bumpers 151a, 151b, and 151c are driven to rebound the lottery ball B₃. When the lottery ball B₃ comes in contact with each of the thumper bumpers 151 a, 151b, and 151c, a detection signal thereof is sent to the main controller 30. Through the detection signal, the main controller 30 can perceive whether the lottery ball comes in contact with the thumper bumpers 151 a, 151b, and 151c or not. Further, when a detection signal corresponding to each of the thumper bumpers 151a, 151b, and 151c is received, the main controller 30 adds a prescribed score to score data within the RAM.

When it is judged that the ball-storage number data reaches three, the main controller 30 executes the second lottery program so as to control the central lottery device 150 and then executes the fantastic chance. Specifically, first, the main controller 30 allocates scores which are added when a lottery ball comes in contact with the thumper bumper 151 a, 151 b, and 151c, respectively. Then, the main controller 30 outputs a ball supply instruction to the lottery ball supplier. The lottery ball supplier receiving the instruction drives the ball supply controller so as to supply one lottery ball B₃ onto the lottery ball receiving table 152. In the fantastic chance according to this modification, when a score addition condition where a lottery ball B₃ comes in contact with any one of the thumper bumpers 151a, 151b, and 151c is satisfied, the score corresponding to the thumper bumper, with which the lottery ball B₃ comes in contact, is added to the score data within the RAM such that winning is determined by whether a winning condition where the value of the score data reaches a specified value is satisfied or not.

In this modification, there are two types of fantastic chances, i.e., a normal fantastic chance and a special fantastic chance, similar to those of the embodiment. That is, as the main controller 30 executes the second lottery game to control the central lottery device 50, the main controller 30 is operated at any one of a normal operation mode and a special operation mode. In the normal operation mode where the normal fantastic chance is executed, the score to be added when a lottery ball comes in contact with the thumper bumper 151a is ten points, the score to be added when a lottery ball comes in contact with the thumper bumper 151b is 20 points, and the score to be added when a lottery bell comes in contact with the thumper bumper 151c is 30 points. Meanwhile, in the special operation mode where the special fantastic chance is executed, whenever a lottery ball comes in contact with any one of the thumper bumpers 151a, 151b, and 151c, 30 points are added. Further, those fantastic chances are executed in the same manner, except that the scores to be added are different from each other. In this modification, as described above, if the score data within the RAM indicating the accumulated scores corresponding to the number of thumper bumpers, with which a lottery ball comes in contact, does not reach a specified value (for example, 300 points), winning is not determined. Therefore, the special fantastic chance is a lottery game of which the winning probability is higher than the normal fantastic chance. That is, the main controller 30 executing the second lottery program selects any one of two operation modes of which the winning probabilities are different from each other. Then, the main controller 30 executes any one of the normal fantastic chance and the special fantastic chance.

On the upper faces of the respective thumper bumpers 151a, 151b, and 151c, score indicators are provided, as shown in Fig. 7. Display control of the respective score indicators is performed by the main controller 30. That is, the main controller 30 selects an operation mode as described above, and then performs display control in accordance with the operation mode such that corresponding scores are displayed on the score indicators of the respective thumper bumpers 151a, 151b, and 151c. Fig. 7 shows an example of the normal fantastic chance.

Whether the main controller 30 operates at the normal operation mode or at the special operation mode is determined in accordance with the result of the computer lottery game. Specifically, when the high-probability bonus is hit in the previous computer lottery game such that the state changes into the high-probability state, and when the high-probability state is continuously maintained, the main controller 30 operates at the special operation mode. Meanwhile, when a current state is the normal state, the main controller operates at the normal operation mode. That is, in this embodiment, the main controller 30 serving as an operation mode switcher judges whether a current state is the high-probability state or not, similar to the above-described embodiment. When it is judged that the current state is not the high-probability state, the main controller 30 switches the operation mode to the normal operation mode where the normal fantastic chance is executed. When it is judged that the current state is the high-probability state, the main controller 30 switches the operation mode to the special operation mode where the special fantastic chance is executed.

In any one of the chances, the main controller 30 adds the score corresponding to the thumper bumper, with which a lottery ball comes in contact, to the score data within the RAM. Then, the main controller 30 judges whether the value of the score data reaches a specified value or not. Further, the main controller 30 also judges whether or not the lottery ball B₃ enters any one of the non-winning ports C₂₁ and C₂₂ before the score data reaches the specified value. When the lottery ball B₃ enters any one of the non-winning ports C₂₁ and C₂₂ before the score data reaches the specified value, the main controller 30 judges that the value of the bonus is not won and then terminates the fantastic chance. Meanwhile, when it is judged that the score data has reached the specified value, the main controller 30 judges that the bonus is hit. Then, the main controller 30 executes a third lottery game stored in the ROM so as to control the central lottery device 50 and executes the above-described jackpot chance. Moreover, even when it is judged that the bonus is not hit, the main controller 30 outputs an instruction to payout tokens as many as the number of tokens according to the value of the score data to the second token supplier 57. The token supplier 18 receiving the token supply instruction controls the token supplying section so as to supply tokens as many as the number of tokens according to the token supply instruction, similar to the above-mentioned embodiment. Further, the tokens are ejected from the token ejector 57a into the pusher table 13 of the target station 10, and then fall down onto the play field 2.

In this modification, as a method for changing the winning probability of the fantastic chance as a physical lottery game, it has been described that the scores to be added when the lottery ball comes in contact with the thumper bumpers 151a, 151b, and 161c, respectively, are varied. However, another method may be used. For example, shutters may be provided in three of the non-winning ports C₂₂ such that a lottery moving body easily enters the non-winning ports or has difficulty in entering the non-winning ports. In this case, in order to increase a winning probability, a driving mechanism for opening or closing the shutters is controlled such that the shutters are closed. Further, in order to reduce a winning probability, the driving mechanism for opening or closing the shutters is controlled such that the shutters are opened.

Further, a driving mechanism for changing the size (width) of the non-winning ports C₂₁ and C₂₂ may be provided so that a lottery moving body easily enters the non-winning ports C₂₁ and C₂₂ or has difficulty in entering the non-winning ports C₂₁ and C₂₂. In this case, the driving mechanism may be controlled so as to vary the winning probability. In order to increase the winning probability, the driving mechanism is controlled such that the sizes of the non-winning ports C₂₁ and C₂₂ are reduced. Further, in order to reduce the winning probability, the driving mechanism is controlled such that the sizes of ball holding openings allocated to the winning ports are enlarged.

Moreover, a protrusion for changing a rolling direction of the lottery ball may be provided on the lottery ball receiving table 152. Then, the state of protrusion is changed by a driving mechanism, or the inclination direction of the lottery ball receiving table 152 is changed by the driving mechanism such that a lottery moving body easily comes in contact with the thumper bumpers 151a, 151b, and 151c or has difficulty in coming in contact with the thumper bumpers 151a, 151b, and 151c. Then, the lottery moving body easily enters the non-winning ports C₂₁ and C₂₂ or has difficulty in entering the non-winning ports C₂₁ and C₂₂.

In the above-described embodiment (including the modification, which is the same in the followings), the mode switching condition for switching the operation modes of the computer lottery game and the fantastic chance is where a prescribed game result is obtained. In order to obtain the prescribed game result in the computer lottery game, the normal bonus should be hit in the high-probability state or the high-probability bonus should be hit in the normal state. However, a condition having no relation with the game result of the computer lottery game (the first game) may be applied. For example, whenever a mode switching condition where a prescribed time period (for example, ten minutes) passes is satisfied, the operation mode may be switched. In addition, a separate lottery may be performed. When the winning is hit in this separate lottery, a mode switching condition is satisfied so that the operation mode of the computer lottery game is switched to an operation mode where the computer lottery game is in the high-probability state for a prescribed time period and the operation mode of the fantastic chance is switched to the special operation mode for a prescribed time period. In this case, the length of the prescribed time period may be determined by a separate lottery.

In the above-described embodiment, it has been described that the first game is the computer lottery game and the second game is a physical lottery game called the fantastic chance. However, although one of them or both of them may be a non-lottery game, it is possible to provide the same excellent game property. For example, the following game machine may be provided. A first game (pusher game) of dropping tokens to the token-falling groove 14 is executed, and simultaneously, a second game is executed. In the second game, whenever five tokens are detected by the token sensor (start checker) 16, one virtual gold coin is added. When the number of virtual gold coins reaches a prescribed number, a prescribed number of tokens are paid out. Further, when a mode switching condition where more than two tokens are detected by the token sensor 16 is satisfied within a relatively short time period, the operation mode of the first game is switched to an operation mode where the stopper 12a is retracted for a prescribed time period, Simultaneously, the operation mode of the second game is switched to an operation mode where one virtual gold coin is added whenever one token is detected by the token sensor 16. Even in this example, when the mode switching condition where more than two tokens are detected by the token sensor 16 is satisfied within the prescribed time period, the contents of the first game are changed so that tokens easily fall down to the token-falling groove 14, and the contents of the second game are changed so that virtual gold coins are easily added. Accordingly, the connection between two different games (the first and second games) becomes strong, and it is possible to provide a game machine having an excellent game property.

In the above-described embodiment, it has been described that the winning probability of the fantastic chance is changed in accordance with the lottery result of the computer lottery game. However, the winning probability of the jackpot chance may be changed. Specifically, as the lottery result of the computer lottery game, when the state changes into the high-probability state, and when the state does not change into the high-probability state, the main controller 30 executing the jackpot chance may change the number of winning ports to be allocated. In this case, as a large number of winning ports are allocated, the winning probability increases.

In the above-described embodiment (including the modification), it has been described that the lottery balls B₁ to B₃ to be used in the physical lottery games such as the fantastic chance and the like differ from the balls to be supplied to the play field of each of the stations. However, the same balls can be used. In this case, the balls which have fallen down from the token-falling groove 14 may be conveyed by a ball conveyer so as to be supplied to the lottery ball receiving table 52 of the central lottery device 50. Further, the shape of the lottery moving body to be used in the physical lottery game is not limited to the spherical shape like the shape of the lottery balls B₁ to B₃, but is arbitrarily determined in the relationship with the lottery mechanism of the physical lottery game.

In the above-described embodiment, the pusher game machine has been exemplified. However, the same effect can be exhibited in other game machines.

## Claims

1. A game machine,
a play field, including a token table adapted to mount a plurality of tokens on an upper face thereof, and a groove adapted to receive a token fallen from the token table;
a moving table, moving along the upper face of the token table in such a direction that the tokens on the token tables are pushed toward the groove;
a token supplier, operable to supply a token to a player in a case where a token pushed by the moving table is fallen from the token table to the groove;
a first game executer, operable to execute a first game with one of a plurality of first operation modes;
a second game executer, operable to execute a second game with one of a plurality of second operation modes; and
an operation mode switcher, operable to switch the one of the first operation modes to another one and to switch the one of the second operation modes to another one, when a prescribed mode switching requirement is satisfied.

2. The game machine as set forth in claim 1, wherein:
the mode switching requirement is satisfied when a prescribed result is attained in the first game.

3. The game machine as set forth in claim 1, wherein:
each of the first operation modes is associated with one of a plurality of winning probability data items;
the first game executer is operable to execute a computer program with one of the first operation modes which is associated with a selected one of the winning probability data items, thereby executing a first lottery game for determining whether a winning is hit; and
the operation mode switcher is operable to effect, when one of a plurality of mode switching requirements each of which is associated with one of the winning probability data items is satisfied, one of the first operation modes corresponding to the one of the winning probability data items.

4. The game machine as set forth in claim 3, wherein:
the second game executer is operable to execute a second lottery game with one of the second operation modes having winning probabilities which are different from one another; and
the operation mode switcher is operable to effect one of the second operation modes having a higher winning probability when the selected one of the winning probability data items has a higher winning probability.

5. The game machine as set forth in claim 1, wherein;
the second game executer is operable to execute a second lottery game with one of the second operation modes having winning probabilities which are different from one another.

6. The game machine as set forth in claim 4, wherein:
the second game executer comprises a supplier operable to supply a lottery moving body, and a winning port forming member forming at least one winning port which is adapted to receive the lottery moving body; and
the second game executer is operable to execute the second lottery game for determining whether a winning is hit in accordance with whether the lottery moving body is received by the winning port.

7. The game machine as set forth in claim 6, wherein:
the second game executer comprises a winning port changer operable to change a number or a size of the winning port; and
the operation mode switcher is operable to switch the second operation modes by causing the winning port changer to change the number or the size of the winning port.

8. The game machine as set forth in claim 6, wherein:
the supplier is operable to supply the lottery moving body into the play field in accordance with a result of the first game.

9. The game machine as set forth in claim 5, wherein:
the second game executer comprises a supplier operable to supply a lottery moving body, and a winning port forming member forming at least one winning port which is adapted to receive the lottery moving body; and
the second game executor is operable to execute the second lottery game for determining whether a winning is hit in accordance with whether the lottery moving body is received by the winning port.

10. The game machine as set forth in claim 9, wherein:
the second game executer comprises a winning port changer operable to change a number or a size of the winning port; and
the operation mode switcher is operable to switch the second operation modes by causing the winning port changer to change the number or the size of the winning port.

11. The game machine as set forth in claim 9, wherein:
the supplier is operable to supply the lottery moving body into the play field in accordance with a result of the first game.

12. The game machine as set forth in claim 1, further comprising:
a detector, operable to detect a token fallen from the token table to the groove, wherein:
the first game executer is operable to start the first game when the detector detects the token.

13. A game machine, comprising:
a first game executer, operable to execute a computer program with one of first operation modes which is associated with a selected one of winning probability data which are respectively associated with different winning probabilities, thereby executing a first lottery game for determining whether a winning is hit;
a second game executer, operable to move a lottery moving body with one of second operation modes which are respectively associated with different winning probabilities, thereby executing a second lottery game for determining whether a winning is hit in accordance with whether the lottery moving body satisfies a prescribed winning requirement; and
an operation mode switcher operable to switch the one of the first operation modes to another one and to switch the one of the second operation modes to another one, when a prescribed mode switching requirement is satisfied.

14. The game machine as set forth in claim 13, wherein:
the second game executer comprises a supplier operable to supply a lottery moving body, and a winning port forming member forming at least one winning port which is adapted to receive the lottery moving body; and
the second game executer is operable to execute the second lottery game for determining whether a winning is hit in accordance with whether the lottery moving body is received by the winning port.

15. The game machine as set forth in claim 14, wherein:
the second game executer comprises a winning port changer operable to change a number or a size of the winning port; and
the operation mode switcher is operable to switch the second operation modes by causing the winning port changer to change the number or the size of the winning port.

16. The game machine as set forth in claim 14, wherein:
the winning port forming member forms at least one non-winning port adapted to receive the lottery moving body;
the second game executer comprises a winning port changer operable to change a number or a size of the non-winning port; and
the operation mode switcher is operable to switch the second operation modes by causing the winning port changer to change the number or the size of the non-winning port.

17. The game machine as set forth in claim 13, wherein:
the second game executer comprises a supplier operable to supply a lottery moving body;
the second game executer is operable to accumulate a point when the lottery moving body satisfies a prescribed point accumulating requirement, thereby executing a second lottery game for determining whether a winning is hit in accordance with whether the accumulated point reaches a prescribed value; and
points to be accumulated when the point accumulating requirement is satisfied are different in the respective second operation modes.
